# EUROPEAN PATENT APPLICATION

(11) **EP 1 850 548 A1**
(43) Date of publication of application: **31.10.2007**
(21) Application number: 07008570.9
(22) Date of filing: 26.04.2007
(51) Int. Cl.: H04L 27/26

(54) **Method and apparatus for the detection of common control channel in an OFDMA cellular communication system**

(30) Priority: 26.04.2006 KR 20060037826
(71) Applicant: Samsung Electronics Co., Ltd., Suwon-si Gyeonggi-do (KR)
(72) Inventor: Cho, Joon-Young, Suwon-si Gyeonggi-do (KR); Lee, Ju-Ho, Suwon-si Gyeonggi-do (KR); Kwak, Yong-Jun, Suwon-si Gyeonggi-do (KR)
(74) Representative: Grünecker, Kinkeldey, Stockmair & Schwanhäusser Anwaltssozietät

(57) **Abstract**

Improvement of reception downlink common control channels in an Orthogonal Frequency Division Multiplexing (OFDM)-based cellular wireless communication system is provided by User Equipment (UE) using a downlink synchronization channel transmitted in an adjacent OFDM symbol as a pilot channel for channel estimation upon common control channel demodulation. When providing both unicast and multicast data services, OFDM symbol transmitting multicast data generally has a longer Cyclic Prefix (CP) than an OFDM symbol for unicast data than a signal frequency network. Therefore, length of CPs of OFDM symbols belonging to each subframe may change depending on whether multimedia data is transmitted. Although a UE does not recognize the length of a CP applied to a subframe in which a common control and a synchronization channel are transmitted, the UE can use a downlink synchronization channel as a channel estimation pilot to demodulate the common control channel.

## Description

### BACKGROUND OF THE INVENTION

### 1. Field of the Invention

The present invention relates to a cellular wireless communication system, and more particularly to a method and apparatus for transmitting/receiving a downlink common control channel such as a system information transmission channel.

### 2. Description of the Related Art

With the recent development in broadcasting and mobile communication system technology, Orthogonal Frequency Division Multiplexing (OFDM) technology is being widely applied. OFDM technology eliminates interference between multi-path signal components existing in a wireless communication channel, guarantees the orthogonality between multiple access users, and enables efficient use of frequency resources. Therefore, OFDM technology is more useful for highspeed data transmission and broadband systems than Direct Sequence Code Division Multiple Access (DS-CDMA) technology, such as Wideband CDMA(WCDMA) or CDMA 2000.

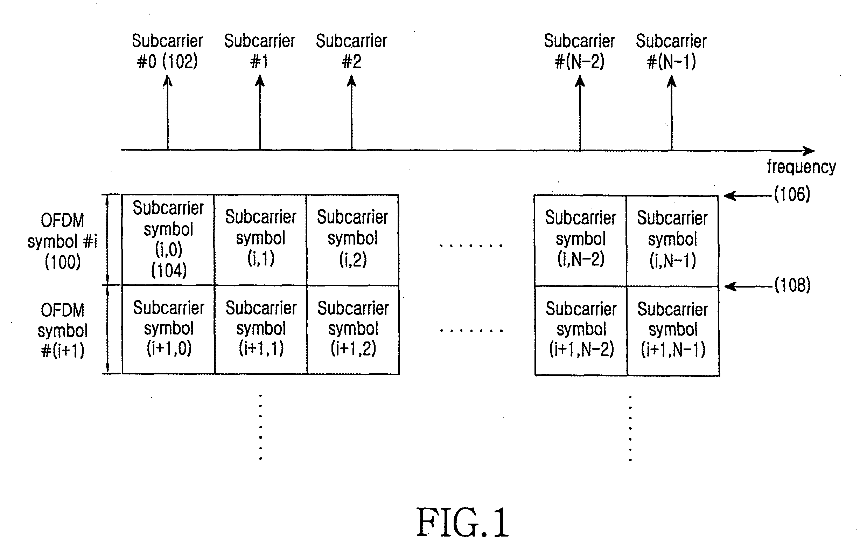

FIG 1 is a view illustrates the structure of an OFDM signal in frequency and time domain. One OFDM symbol 100 occupies *N* number of subcarriers 102 in the frequency domain. Modulation symbols 104 of transmission information are loaded on the subcarriers 102, respectively, and then are simultaneously transmitted in parallel. As described above, the OFDM technology is multi-carrier transmission technology, which can separately load data and control channel information on multiple subcarriers and transmit them in parallel. In FIG. 1, reference numerals 106 and 108 represent starting points of i^{th} and (i+1)^{th} OFDM symbols, respectively. In an OFDM-based communication system, each physical channel includes at least one subcarrier symbol 104.

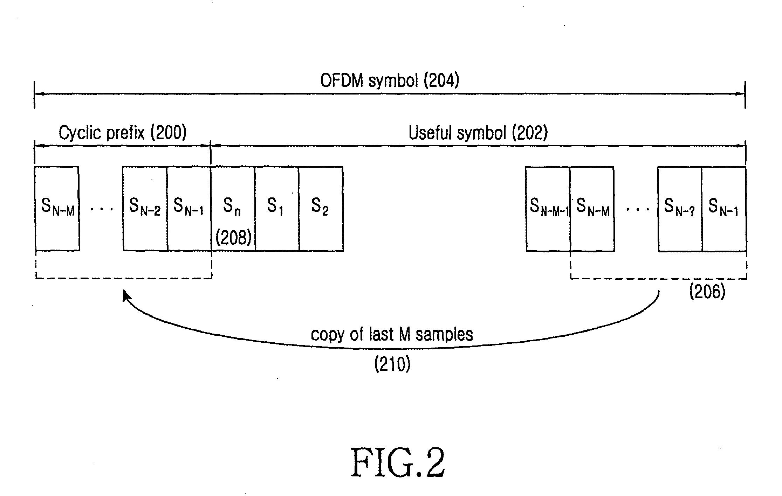

FIG 2 illustrates the structure of an OFDM signal in the time domain.

When an N-size Inverse Fast Fourier Transform (IFFT) is applied to the N subcarriers 102 shown in FIG 1, N samples s₀, s₁, ..., S_{N-1} 208 can be obtained as shown in FIG. 2. An OFDM symbol 204 is configured by copying and inserting the last M samples s_{N-M}, ... , s_{N-2}, s_{N-1} 206 among the N samples into the first part of an OFDM symbol duration as indicated by reference numeral 210. The M samples copied and inserted into the first part, as described above, are referred to as a Cyclic Prefix (CP) 200, and the original N samples are referred to as a useful symbol 202.

One of important characteristics of recent OFDM-based cellular wireless communication systems is to provide unicast and multicast services together.

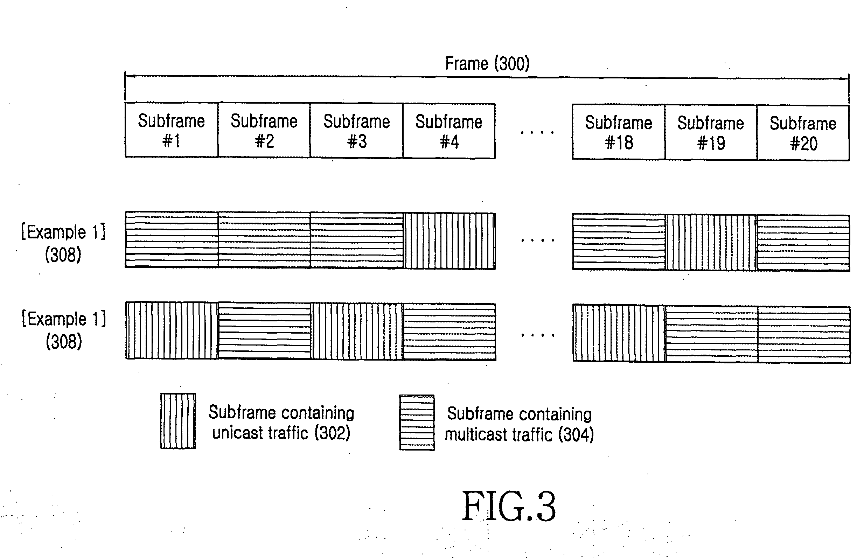

FIG 3 illustrates a case in which unicast data 302 and multicast data 304 multiplexed subframe by subframe in the time domain in one frame 300. As shown in FIG 3, frame 300 includes twenty subframes 306. Between the frame structures of example #1 308 and example #2 310, unicast data 302 and multicast data 304 are transmitted in different subframes. As described above, generally, subframes to transmit unicast data 302 and multicast data 304 may change depending on each frame.

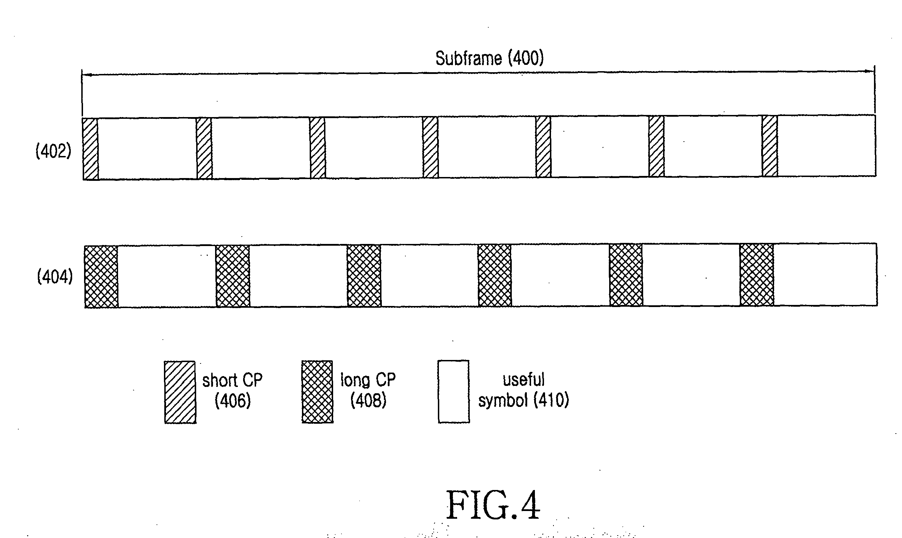

In the case of multicast data, generally, a system is constructed as a Single Frequency Network (SFN) in order to improve the reception performance of User Equipment (UE) by simultaneously transmitting the same data from a plurality of node Bs. In this case, in consideration of time delay of a reception signal, which has been transmitted from a node B located far away from a UE, an OFDM symbol for transmission of multicast data has a longer CP than that for transmission of unicast data. An example in which a subframe structure changes depending on the types of transmission traffic is shown in FIG 4.

In FIG 4, a subframe to which a short CP 406 is applied carries seven OFDM symbols (see reference numeral 402), and a subframe to which a long CP 408 is applied carries six OFDM symbols (see reference numeral 404). In the two cases, each useful symbol 410 has the same length. Therefore, when multicast data is transmitted, and/or when the radius of a cell is very large, the subframe structure of reference numeral 404 may be generally applied. In other cases the subframe structure of reference numeral 402 using a short CP may be applied.

Generally, a UE can acquire information about which type of traffic will be transmitted in which subframe by receiving a common control channel, i.e., a Broadcasting CHannel (BCH) for system information transmission. The BCH is a channel used to transfer system information about a cell which a UE accesses, and is first demodulated after the UE finishes a cell search. When a UE has received the common control channel, the UE can obtain information, such as a cell ID, a system bandwidth and a channel setup according to each cell, which is necessary to receive a data channel and other control channels.

However, a UE located at a cell boundary may find it difficult to receive the BCH due to path loss and interference from other cells.

In the conventional system as described above, in order to improve the reception performance of the BCH, a downlink Synchronization CHannel (SCH) may be used as a pilot for channel estimation upon demodulating the BCH. The downlink SCH is used for a UE to acquire downlink synchronization and a cell identification code through a cell search at the very beginning when the UE accesses a system. When the UE has successfully completed a cell search, the UE can obtain a sequence used in the SCH, so that the UE can use the SCH as a pilot for demodulation of a BCH.

However, in a system where OFDM symbols having CPs of different lengths can be used together, although a UE has successfully completed a cell search, the UE cannot recognize the precise timing of a BCH due to variable CP lengths of the BCH and SCH. Therefore, it is difficult to use the SCH as a pilot channel for demodulation of the BCH.

### SUMMARY OF THE INVENTION

Accordingly, the present invention has been made to solve the above-mentioned problems occurring in conventional systems, and the present invention provides a transmission/reception method and apparatus which can improve the BCH reception performance of a UE in an OFDM-based cellular wireless communication system where OFDM symbols having Cyclic Prefixes (CPs) of different lengths can be used together.

Also, the present invention provides a transmission/reception method and apparatus which can improve BCH reception performance by using an SCH as a channel estimation pilot channel for demodulation of a BCH in an OFDM-based cellular wireless communication system where OFDM symbols having CPs of different lengths can be used together.

The present invention provides a method and apparatus for enabling a UE to use a downlink synchronization channel as a channel estimation pilot for demodulation of a common control channel although the UE does not recognize the length of a CP which has been applied to a subframe to transfer the common control channel and synchronization channel in an OFDM-based cellular wireless communication system.

In accordance with an aspect of the present invention, there is provided a method for transmitting a common control channel in an Orthogonal Frequency Division Multiplexing (OFDM) access-based cellular wireless communication system, which provides unicast or multicast data service, the method including when timing of a first OFDM symbol duration to transmit a BCH has been reached, forming an OFDM symbol by mapping symbols of the BCH and other physical channels to be transmitted at the OFDM symbol timing to corresponding OFDM subcarriers, and applying a CP of a preset length to the OFDM symbol; when timing of a second OFDM symbol duration following the first OFDM symbol duration has been reached, forming an OFDM symbol containing an SCH, and applying a short CP to the OFDM symbol containing the SCH; and adding and transmitting each BCH OFDM symbol and each SCH OFDM symbol to a UE. In accordance with another aspect of the present invention, there is provided a method for receiving a common control channel in an OFDM access-based cellular wireless communication system, which provides unicast or multicast data service, the method including performing cell search with respect to a subframe received from a transmitter, the subframe containing information about at least one BCH, SCH information and data; recognizing a start time of a subframe from the SCH information received in the cell search step; receiving and storing BCH subcarrier symbols of a first OFDM symbol duration including the BCH information in the subframe; estimating a channel for the BCH reception signal from an SCH which begins after a length of a predetermined short CP in a second OFDM symbol duration following the first OFDM symbol duration in which the BCH information is included; and demodulating and decoding the stored BCH subcarrier symbols by using the estimated channel information.

### BRIEF DESCRIPTION OF THE DRAWINGS

The above and other aspects, features and advantages of the present invention will be more apparent from the following detailed description taken in conjunction with the accompanying drawings, in which:
FIG 1 illustrates the structure of an OFDM signal in frequency and time domain;
FIG 2 illustrates the structure of an OFDM signal in the time domain;
FIG 3 illustrates an example of a frame format for multiplexing unicast and multicast data in the time domain and transmitting the multiplexed data;
FIG 4 is an example in which different numbers of OFDM symbols are included and different formats are employed depending on the types of transmission traffic;
FIG 5 illustrates an example in which a downlink synchronization channel and a common control channel are transmitted in adjacent OFDM symbols in the same bandwidth;
FIG 6 illustrates examples in which a downlink synchronization channel and a common control channel are transmitted in adjacent OFDM symbols;
FIG 7 illustrates mapping structures of downlink synchronization channel and common control channels according to a first embodiment of the present invention;
FIG 8 is a flowchart illustrating a transmission procedure of a node B according to the first embodiment of the present invention;
FIG 9 is a block diagram illustrating the configuration of the transmitter in the node B according to the first embodiment of the present invention;
FIG 10 is a flowchart illustrating a reception procedure of User Equipment (UE) according to the first embodiment of the present invention;
FIG 11 is a block diagram illustrating the configuration of a receiver of the UE according to the first embodiment of the present invention; and
FIG 12 illustrates a mapping structure of downlink synchronization channels and common control channels in a frame according to the first embodiment of the present invention.

### DETAILED DESCRIPTION OF THE PREFERREDEMBODIMENTS

Hereinafter, exemplary embodiments of the present invention will be described with reference to the accompanying drawings. In the following description of the present invention, a detailed description of known functions and configurations incorporated herein will be omitted when it may obscure the subject matter of the present invention. In addition, the terminology used in the description is defined in consideration of the function of corresponding components used in the present invention and may be varied according to users, operator's intention, or practices. Accordingly, the definition must be interpreted based on the overall content disclosed in the description.

The present invention provides a method and apparatus which enables User Equipment (UE) to use a downlink synchronization channel as a channel estimation pilot for demodulation of a common control channel although the UE does not recognize the length of a Cyclic Prefix (CP) which has been applied to a subframe to transfer the common control channel and synchronization channel in a cellular wireless communication system based on an Orthogonal Frequency Division Multiplexing (OFDM) transmission technology. The following description of the present invention mainly discusses a system based on OFDM transmission technology. However, the present invention can be applied to any other communication system having similar technical background and channel types without departing from the scope of the invention.

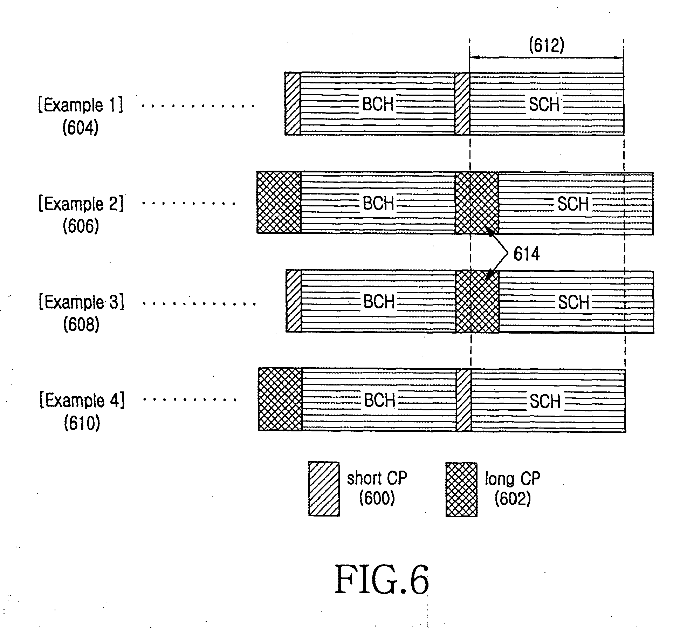

The following description will be given about a scheme of transmitting (SCH) in an OFDM symbol adjacent to a Broadcasting Channel (BCH) for the purpose of improving the reception performance of the BCH by using the SCH as a pilot channel for demodulation of the BCH.

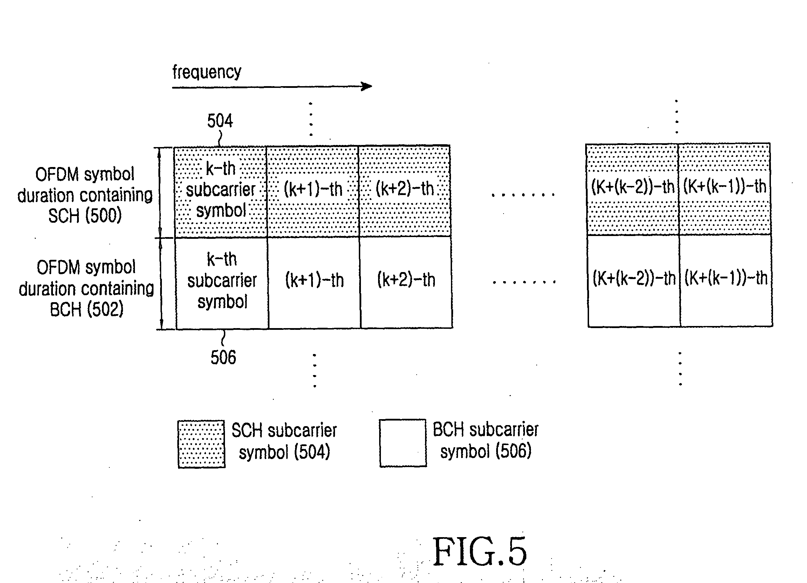

FIG 5 illustrates an example in which a downlink SCH and a common control channel (i.e., a BCH) are transmitted in adjacent OFDM symbols in the same bandwidth. In FIG 5, it is assumed that the SCH and BCH are transmitted by using K subcarriers from a k^{th} subcarrier to a (k+K-1)^{th} subcarrier, in OFDM symbol durations 500 and 502, respectively. Through subcarriers other than the index subcarriers, data or other control channels may be transmitted together with the SCH or BCH. When a UE has successfully completed an initial cell search from the SCH, the UE estimates a channel from subcarrier symbols 504 of the SCH, and uses the estimated channel to demodulate subcarrier symbols 506 of the BCH. Since a large number of the subcarrier symbols 504 are transmitted, as compared with other pilot channels, and are adjoined to the subcarrier symbols 506 of the BCH, an excellent channel estimation performance can be obtained, allowing significantly improvement of the reception performance of the BCH.
However, when CPs having different lengths may be applied according to each OFDM symbol, it may be not easy to transmit an SCH and a BCH in consecutive OFDM symbols and to utilize the SCH as a pilot channel, as shown in FIG 5. This is because the lengths of CPs 600 and 602 of an OFDM symbol used to transmit the SCH and BCH are different, as shown in FIG 6. For example, the lengths of CPs 600 and 602 are determined depending on whether the type of data transmitted together with the channels in an OFDM symbol duration, in which the channels are transmitted, corresponds to a unicast or a multicast. In FIG 6, while Example #1 604 shows both SCH and BCH using the CP 600 having a short length, Example #2 606 shows both SCH and BCH using the CP 602 having a long length, so that time intervals between an SCH OFDM symbol and a BCH OFDM symbol in Examples 604 and 606 are different. Examples #1 and #2 (604 and 606) may occur when unicast data and multicast data, respectively, are transmitted in the OFDM symbols. Also, Examples #3 608 and #4 (608 and 610, respectively) show cases where CPs having different lengths are applied depending on OFDM symbols in which SCH and BCH are transmitted.

When types of traffic transmitted according to each OFDM symbol duration vary depending on the system settings, a UE cannot recognize the length of a CP applied to each corresponding OFDM symbol and a time interval between SCH and BCH OFDM symbols before the UE has successfully received the BCH and a relevant control channel. Therefore, although a UE succeeds in a cell search in environments shown in FIG 6, the UE cannot recognize a precise timing for a BCH due to the variable CP length of the BCH, so that it is not easy to use an SH as a pilot channel for demodulation of the BCH.

In this case, demodulation of the BCH may be achieved by using a pilot channel transmitted in the same OFDM symbol as that in which the BCH is transmitted. For example, after succeeding in a cell search from an SCH and acquiring synchronization, a UE receiver estimates a channel from a pilot channel belonging to an OFDM symbol duration 612 in which a BCH is transmitted, and performs a demodulating operation with respect to subcarriers to carry the BCH by using estimated channel information. In this case, although a long CP is applied in the OFDM symbol duration and thus an actual useful symbol of a BCH lags behind the OFDM symbol duration 612, such as in Examples #2 and #3 (606 and 608), there is no problem in estimating FFT timing error and a channel for normal modulation of the BCH, because the useful symbol of the BCH has been copied into a CP 614, and a pilot signal has been subjected to the same FFT timing error as the **BCH.**

Meanwhile, when an SCH is used for demodulation of a BCH, as shown in FIG 6, the number of pilot subcarriers to be utilizable increases significantly, so that channel estimation performance can be greatly improved. Therefore, when a receiver compares a channel estimation value obtained from the pilot channel transmitted in the same OFDM symbol as the BCH with a channel estimation value obtained from an SCH transmitted in an OFDM symbol followed by the BCH, the receiver can estimate the length of a CP applied to the OFDM symbol in which the BCH is transmitted, and can use the SCH to estimate a channel for demodulation of the BCH. However, since such an operation is expected to be exceedingly complex, it is difficult to actually implement and use such a construction.

Accordingly, the following description is provided about technology which can easily search for a cell using an SCH and can easily use the SCH as a pilot for demodulation of a BCH despite variation in the lengths of the CPs of SCH and BCH OFDM symbols.

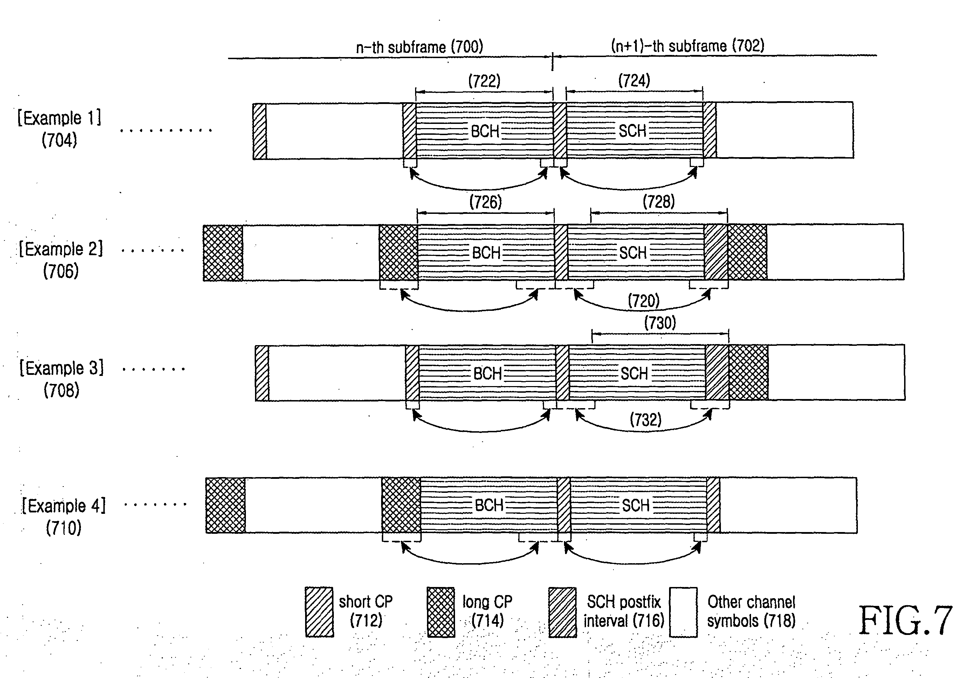

The following embodiment of the present invention proposes a method of applying a CP 712 having a short length between a BCH symbol 722 and an SCH symbol 724 at all times, regardless of the length of a CP applied to a subframe to which the SCH symbol 724 belongs, as shown in FIG 7. In addition, it is proposed to locate the symbol 722 to transmit a BCH at the last part of a subframe 700, and to locate the symbol 724 to transmit an SCH at the first part of a subframe 702 adjoining the subframe 700.

When a BCH is located at the last OFDM symbol of the subframe 700, as proposed above, there is an additional advantage in that all UEs can precisely recognize the location of a BCH within each subframe regardless of the length of each CP. It should be clearly understood that the present invention can be achieved regardless of locations of BCH and SCH within a subframe, if OFDM symbols containing the BCH and SCH are adjacent to each other. The following description will be given about a method of applying the CP 712 having a short length between the BCH symbol 722 and SCH symbol 724 at all times, regardless of the length of a CP applied to a subframe to which the SCH symbol 724 belongs, with reference to FIG. 7.

In FIG 7, Example #1 704 shows a short CP applied to both n^{th} subframe 700 and (n+1)^{th} subframe 702. In this case, a short CP can be applied between the BCH symbol 722 and SCH symbol 724 by itself. As shown in Examples #2 and #3 (706 and 708), although a long CP is applied to the (n+1)^{th} subframe 702, and thus the useful symbol duration of the first OFDM symbol exists in a duration indicated by reference numeral 728 or 730, an SCH useful symbol is nonetheless transmitted in a duration indicated by reference numeral 724. In other words, in Examples #2 and #3 (706 and 708), the useful symbol duration 724 of an SCH and the useful symbol durations 728, 730 of other channels are differently applied in the first OFDM symbol duration of the (n+1)^{th} subframe 702, and a postfix duration 716 of an SCH has the same value as OFDM samples located at the first part of the SCH useful symbol 724. Example #4 710 shows a long CP 714 applied in the n^{th} subframe 700 and a short CP applied in the (n+1)^{th} subframe 702. In this case, similar to Example #1 704, a short CP is applied between the BCH symbol 722 and SCH symbol 724 by itself.

Consequently, as described with reference the examples providing FIG 7, a short CP 712 is applied between the BCH useful symbol 722 and SCH useful symbol 724 in all cases, regardless of the length of each CP applied in the subframes 700 and 702. In contrast, other channels transmitted in the same OFDM symbol as the SCH use a corresponding CP applied in the (n+1)^{th} subframe 702, as the SCH exists. As described above, since the first part of the SCH useful symbol 724 is occupied by a CP having a short length at all times, a UE can acquire the timing of the SCH from a signal received upon an initial cell search, and also can obtain the timing of a subframe and the timing of a BCH.

Meanwhile, in Examples #2 and #3 (706 and 708), a short CP may be applied to even channels other than the SCH in the first OFDM symbol duration of a subframe in which the SCH is transmitted by setting the duration 724 as a useful symbol duration and copying the first part of the useful symbol duration into the postfix duration 716. In this case, similarly, a time interval between a BCH useful symbol and an SCH useful symbol has a constant value at all times, regardless of the types of traffic transmitted in each subframe, so that it is possible to use the SCH as a pilot for demodulation of the BCH.

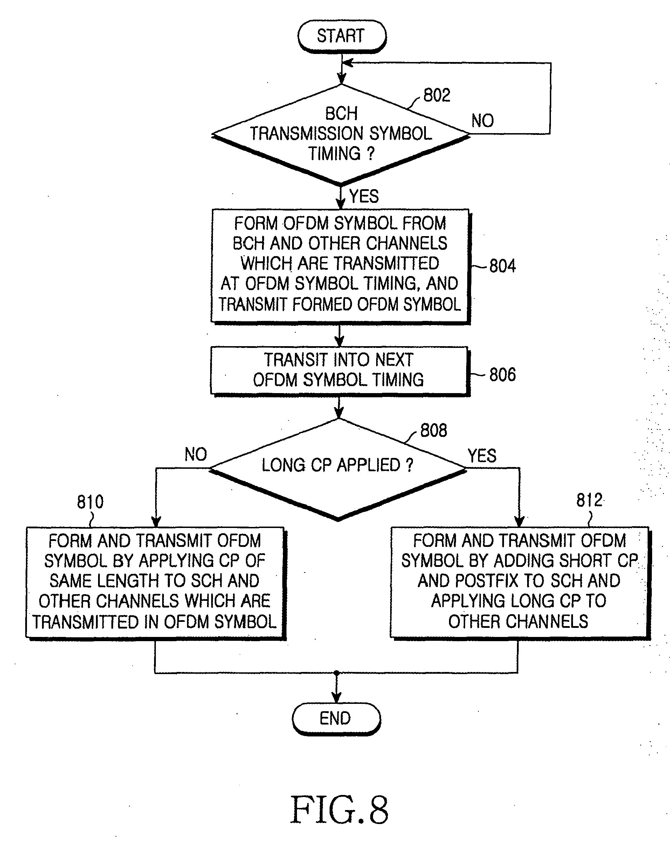

FIG 8 is a flowchart illustrating a transmission procedure of a node B according to an embodiment of the present invention. In step 802, a transmitter of a node B determines if the start time of an OFDM symbol duration to transmit a BCH has been reached. In step 804, the transmitter of the node B maps other physical channels transmitted in the OFDM symbol duration and BCH symbols to corresponding OFDM subcarriers, thereby forming and transmitting an OFDM symbol. In step 806, the transmitter of the node B forms an OFDM symbol including an SCH in the next OFDM symbol duration.

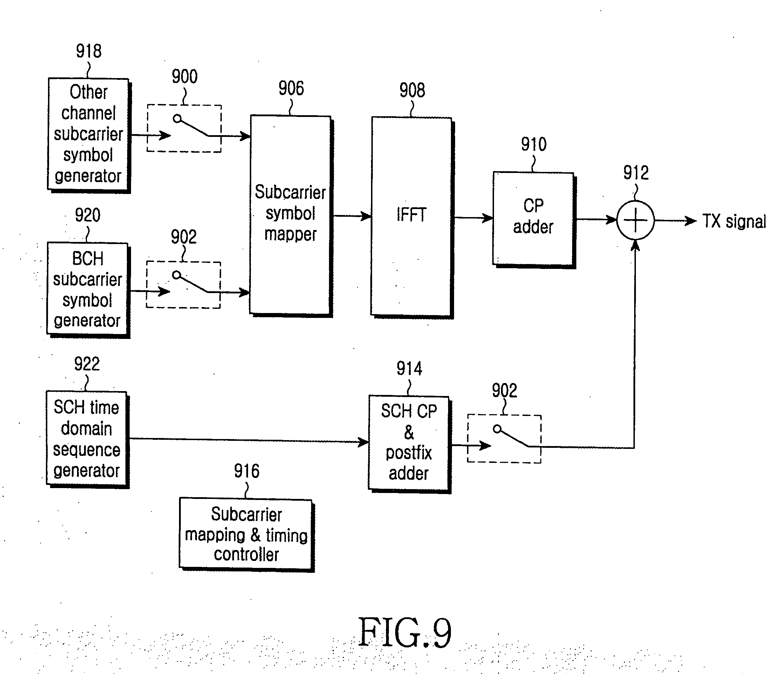

In step 808, the transmitter of the node B determines if a CP to be applied to the next OFDM symbol has a long length. When it is determined in step 808 that the CP to be applied to the next OFDM symbol has a short length, the transmitter of the node B proceeds to step 810, in which the transmitter of the node B forms the OFDM symbol by adding the CP having the same length to an SCH and other physical channels transmitted in the OFDM symbol. In contrast, when it is determined in step 808 that the CP to be applied to the next OFDM symbol has a long length, the transmitter of the node B proceeds to step 812, in which the transmitter of the node B forms and transmits the OFDM symbol by adding a short CP and a postfix to an SCH and applying a long CP to channels other than the SCH. FIG 9 is a block diagram illustrating the configuration of the transmitter in the node B according to an embodiment of the present invention. A BCH subcarrier symbol generator 920 and an other-channel subcarrier symbol generator 918 generate and input symbols into a subcarrier symbol mapper 906 at an OFDM symbol timing to transmit the channels. In this case, switch devices 900 and 902 are switched to output the symbols transmitted from the symbol generators 918 and 920, under the control of a subcarrier mapping and timing controller 916. The subcarrier symbol mapper 906 maps input symbols to corresponding subcarriers and outputs subcarrier symbols. The subcarrier symbols are transferred to an IFFT unit 908 so as to be subjected to an IFFT, and arc then output. A CP addition unit 910 forms a transmission OFDM symbol by adding a CP to the subcarrier symbol output from the IFFT unit 908.

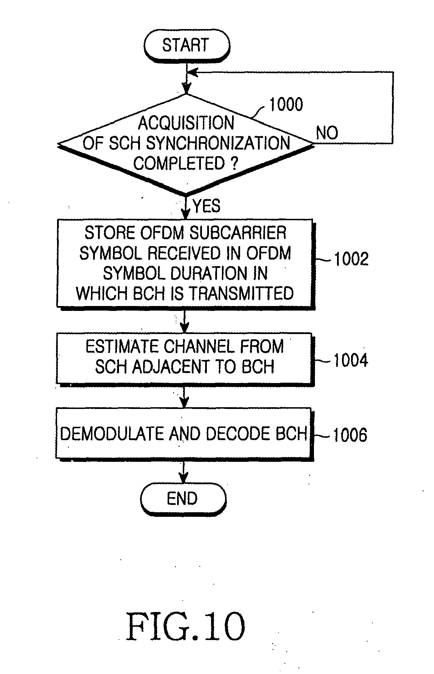

Meanwhile, an SCH time-domain sequence generator 922 outputs a time-domain sequence in which subcarrier symbols of the SCH has been subjected to the IFFT. An SCH CP and postfix adder 914 adds either only a CP or a CP and a postfix to the time-domain sequence, according to the length of a CP applied in an OFDM symbol duration in which the SCH is transmitted. An adder 912 adds and outputs the SCH and other channel OFDM signals other than the SCH, which are transmitted in the same OFDM symbol duration as the SCH. In this procedure, since the SCH is configured with subcarrier symbols of a predetermined pattern, the SCH time-domain sequence generator 922 can select and use a time-domain pattern of a pre-stored SCH sequence. In contrast, for other channels, such as a BCH, in which subcarrier symbols varies depending on transmitted information, it is necessary to perform a complicated procedure of adding a CP of a length different from that of other channels in the same OFDM symbol duration and adding a postfix. FIG 10 is a flowchart illustrating a reception procedure of a UE according to an embodiment of the present invention. First, in step 1000, the UE obtains information about a start time of a subframe, in which an SCH is transmitted, through an initial cell search process. As shown in FIG 7, an SCH useful symbol is transmitted away from the start time of the subframe by the length of a short CP, regardless of the length of a CP applied to the subframe in which the SCH is transmitted, so that the UE can recognize the precise timing of a BCH by acquiring the synchronization of the SCH. Then, in step 1002, the UE receives and stores reception OFDM subcarrier symbols in an OFDM symbol duration in which the BCH is transmitted. Next, in step 1004, the UE estimates a channel of the BCH reception signal from an SCH received in the next OFDM symbol duration , and in step 1006 demodulates and decodes the stored BCH subcarrier symbols by using the estimated channel information.

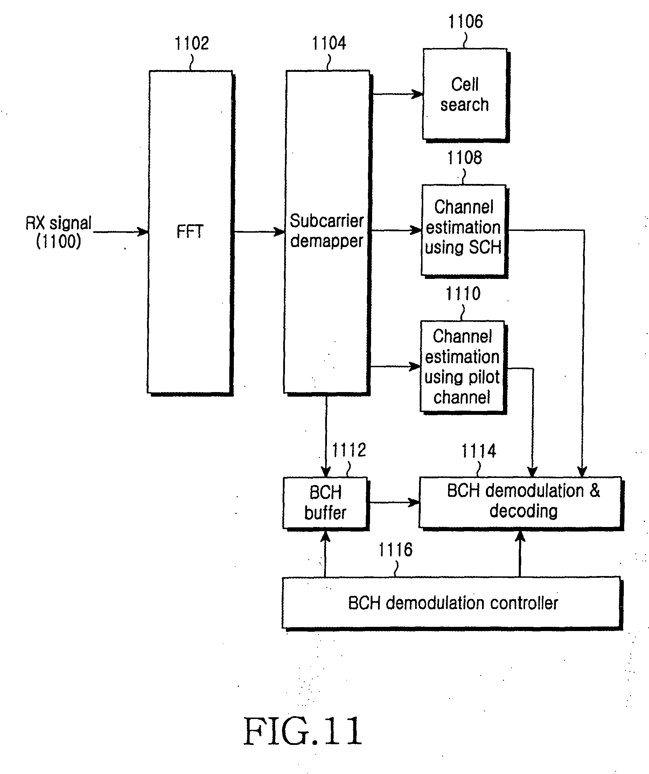

FIG 11 is a block diagram illustrating the configuration of a receiver of the UE according to an embodiment of the present invention. A received signal 1100 is Fourier transformed by an FFT block 1102, so that subcarrier symbols belonging to a relevant OFDM symbol are obtained. BCH subcarrier symbols of subcarrier reception symbols, which have not been subject to a channel compensation and have been output from a subcarrier demapper 1104, are stored in a BCH buffer 1112. Meanwhile, the SCH subcarrier symbols are forwarded to a cell search unit 1106 and to a channel estimation unit 1108 using an SCH so as to be used for cell search and channel estimation. A channel estimation unit 1110 using a pilot channel performs a channel estimation operation by using pilot channel subcarrier symbols.

The BCH subcarrier symbols stored in the BCH buffer 1112 are forwarded to a BCH demodulation and decoding unit 1114. The BCH demodulation and decoding unit 1114 demodulates and decodes a corresponding BCH based on a channel value which is estimated from the SCH transferred from the channel estimation unit 1108. Meanwhile, a BCH demodulation controller 1116 controls a BCH reception procedure, and particularly, controls the BCH buffer 1112 and the BCH demodulation and decoding unit 1114.

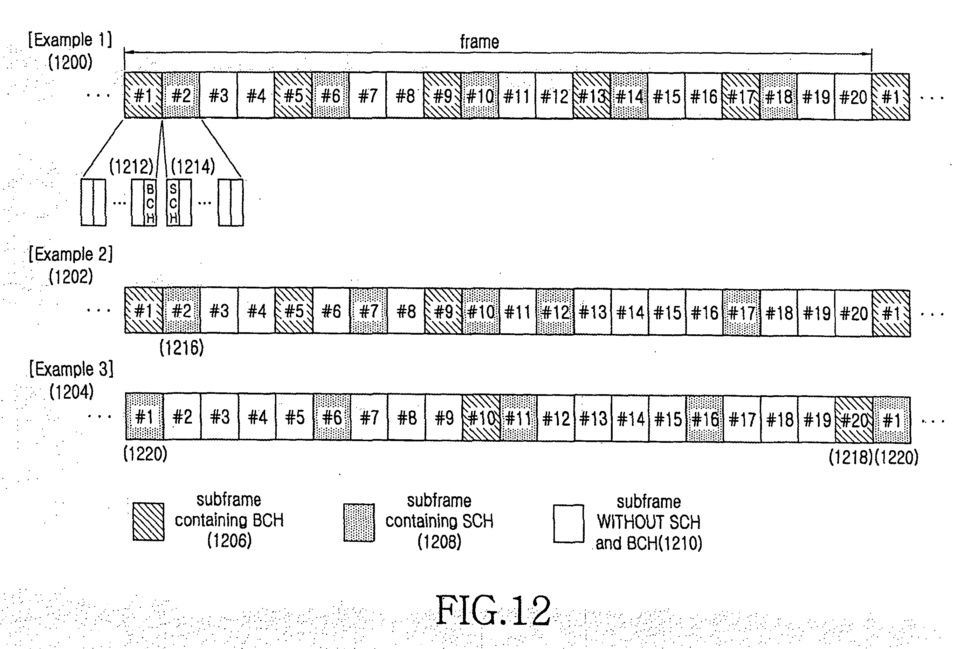

FIG. 12 illustrates a mapping structure of downlink synchronization channels and common control channels in a frame according to an embodiment of the present invention. FIG 12 provides an example in which a structure of transmitting a BCH and an SCH in consecutive OFDM symbols is applied to a frame, in which it is assumed that one frame includes twenty subframes. In FIG 12, reference numeral 1206 indicates a subframe including a BCH, in which the BCH is transmitted in the last OFDM symbol (see reference numeral 1212), as described in FIG 7. Reference numeral 1208 indicates a subframe including an SCH, in which the SCH is transmitted in the first OFDM symbol (see reference numeral 1214), as described in FIG. 7. Reference numeral 1210 indicates a subframe including neither an SCH nor a BCH.

In FIG 12, Example #1 1200 shows each of a BCH and an SCH separately transmitted over five subframe durations within one frame. In this case, each SCH can be used as a pilot for demodulation of a BCH adjacent to the SCH. When the same BCH information is repeatedly transmitted in a plurality of subframes, or when one BCH channel coding block is separately transmitted over a plurality of OFDM symbols, a BCH can be separately mapped to multiple subframes, as shown in example # 1 1200. In the case of an SCH, information about a cell ID, a frame timing and so on may be distributed as SCHs transmitted in five OFDM symbols so that an SCH of a different value can be transmitted in each OFDM symbol duration, or the same SCH may be transmitted in all the five OFDM symbols.

Example #2 1202 shows a BCH transmitted over only one subframe, and an SCH transmitted over four subframes. The case in which only one OFDM symbol duration is used for the BCH may occur when the amount of information to be transmitted through the BCH is not large. In Example #2 1202, an SCH 1216 adjoining a BCH can be used for channel estimation for demodulation of the BCH, and the other SCHs may be used mainly for a cell search.

Example #3 1204 shows a BCH and an SCH are separately transmitted over two and four subframes, respectively, within one frame. In this case, a BCH transmitted in the last subframe 1218 within the frame can be estimated the BCH from an SCH transmitted in the first subframe 1220 of the next frame, and thus can be demodulated.
Effects of the present invention, especially the effects obtained by the above-mentioned embodiments, are summarized as follows. According to the present invention, an SCH is transmitted in consecutive OFDM symbols so that the SCH can be used for channel estimation upon demodulation of downlink common control channels such as a BCH, so that the UE can rapidly acquire system information upon initial system access and upon handover to another cell. In addition, in contrast to the conventional scheme, the present invention can be efficiently achieved, even when CPs applied to OFDM symbols in which the BCH and SCH are transmitted are variable, and also can efficiently perform a cell search using the SCH.

While the present invention has been shown and described with reference to certain exemplary embodiments thereof, it will be understood by those skilled in the art that various changes in form and details may be made therein without departing from the spirit and scope of the invention as defined by the appended claims. Accordingly, the scope of the invention is not to be limited by the above embodiments but is defined by the claims and the equivalents thereof.

## Claims

1. A method for transmitting a Broadcasting CHannel (BCH) in an Orthogonal Frequency Division Multiplexing Access (OFDMA) based cellular wireless communication system, which employs two types of OFDM symbols including a short Cyclic Prefix (CP) and a long CP according to attributes of physical channels, the method comprising the steps of:
transmitting an OFDM symbol containing the BCH during a last symbol duration of a first subframeby applying a first CP having length corresponding to attributes of physical channel transmitted during the first subframe duration ; and
transmitting an OFDM symbol containing a Synchronization CHannel (SCH) during a first symbol duration of a consecutive second subframe by applying a second CP having length corresponding to attributes of physical channel transmitted during the second subframe duration.

2. The method as claimed in claim 1, wherein the CP is set to have a short length when an attribute of a corresponding physical channel corresponds to a unicast and is set to have a long length when the attribute of the corresponding physical channel corresponds to a multicast.

3. The method as claimed in claim 1, wherein the step of applying the second CP to the SCH symbol comprises applying a short CP and a postfix having short length.

4. The method as claimed in claim 1, wherein at least one set of two adjacent subframes is located at a predetermined interval within one frame.

5. The method as claimed in claim 4, wherein, when only one set of the two adjacent subframes exists in the one frame, at least one OFDM symbol containing an SCH is additionally located at the predetermined interval.

6. A method for receiving a Broadcasting CHannel (BCH) in an Orthogonal Frequency Division Multiple Access (OFDMA)based cellular wireless communication system, which employs two types of OFDM symbols including a short Cyclic Prefix (CP) and a long CP according to attributes of physical channels, the method comprising the steps of:
receiving an OFDM symbol containing a Synchronization CHannel (SCH) during a first symbol duration of a first subframe by applying a first CP having length corresponding to attributes of physical channel transmitted during the first subframe duration, wherein the first subframe is consecutive to a subframe containg BCH;
acquiring a subframe timing using the SCH; and
receiving an OFDM symbol containing the BCH during a last symbol duration of the second subframe by applying a first CP having length corresponding to attributes of physical channel transmitted during the second subframe duration.

7. The method as claimed in claim 6, wherein the step of receiving the BCH comprises;
acquiring a decoding timing of the BCH using the subframe timing and a symbol duration; and
decoding the BCH using the decoding timing.

8. The method as claimed in claim 6, further comprising
performing channel estimation with respect to the BCH OFDM symbol duration using the received SCH.

9. The method as claimed in claim 6, wherein the CP is set to have a short length when an attribute of a corresponding physical channel corresponds to a unicast, and is set to have a long length when the attribute of the corresponding physical channel corresponds to a multicast.

10. The method as claimed in claim 6, wherein the step of applying the first CP to the SCH symbol comprises applying a short CP and a postfix having short length.

11. The method as claimed in claim 6, wherein at least one set of two adjacent subframes is located at a predetermined interval within one frame.

12. The method as claimed in claim 11, wherein, when only one set of the two adjacent subframes exists in the one frame, at least one OFDM symbol containing an SCH is additionally located at the predetermined interval.

13. An apparatus for transmitting a Broadcasting CHannel (BCH) in an Orthogonal Frequency Division Multiplexing Access (OFDMA) based cellular wireless communication system, which employs two types of OFDM symbols including a short Cyclic Prefix (CP) and a long CP according to attributes of physical channels, the apparatus comprising:
a BCH symbol generator for generating an OFDM symbol containing the BCH;
a symbol mapper for mapping the BCH Symbol into a last symbol duration of a first subframe;
a CP adder for applying a first CP having length corresponding to attributes of physical channel transmitted during the first subframe duration ;
a SCH symbol generator for generating an OFDM symbol containing a Synchronization CHannel (SCH);
a SCH symbol mapper for mapping the SCH symbol into a first symbol duration of a consecutive second subframe;
a SCH CP adder for applying a second CP having length corresponding to attributes of physical channel transmitted during the second subframe duration; and
a transmitter for transmitting the first and second subframes.

14. The apparatus as claimed in claim 13, wherein the CP is set to have a short length when an attribute of a corresponding physical channel corresponds to a unicast and is set to have a long length when the attribute of the corresponding physical channel corresponds to a multicast.

15. The apparatus as claimed in claim 13, wherein the SCH symbol adder applying the second CP to the SCH symbol comprises applying a short CP and a postfix having short length.

16. The apparatus as claimed in claim 13, wherein at least one set of two adjacent subframes is located at a predetermined interval within one frame.

17. The apparatus as claimed in claim 16, wherein, when only one set of the two adjacent subframes exists in the one frame, at least one OFDM symbol containing an SCH is additionally located at the predetermined interval.

18. An apparatus for receiving a Broadcasting CHannel (BCH) in an Orthogonal Frequency Division Multiplexing Access (OFDMA) based cellular wireless communication system, which employs two types of OFDM symbols including a short Cyclic Prefix (CP) and a long CP according to attributes of physical channels, the apparatus comprising:
receiver for receiving consecutive frames wherein a first frame containing the BCH during a last symbol duration of the first subframe by applying a first CP having length corresponding to attributes of physical channel transmitted during the first subframe duration and a consecutive second subframe containing a Synchronization CHannel (SCH) during a first symbol duration of a first subframe by applying a second CP having length corresponding to attributes of physical channel transmitted during the first subframe duration;
a searcher for acquiring a subframe timing using the SCH;
a BCH demodulator for decoding the BCH using the subframe timing.

19. The method as claimed in claim 18, wherein the step of decoding the BCH comprises;
acquiring a decoding timing of the BCH using the subframe timing and a symbol duration; and
decoding the BCH using the decoding timing.

20. The apparatus as claimed in claim 18, further comprising
a channel estimator for performing channel estimation with respect to the BCH OFDM symbol duration using the received SCH.

21. The apparatus as claimed in claim 18, wherein the CP is set to have a short length when an attribute of a corresponding physical channel corresponds to a unicast, and is set to have a long length when the attribute of the corresponding physical channel corresponds to a multicast.

22. The apparatus as claimed in claim 18, wherein the second CP to the SCH symbol comprises applying a short CP and a postfix having short length.

23. The apparatus as claimed in claim 18, wherein at least one set of two adjacent subframes is located at a predetermined interval within one frame.

24. The method as claimed in claim 23, wherein, when only one set of the two adjacent subframes exists in the one frame, at least one OFDM symbol containing an SCH is additionally located at the predetermined interval.
